(19) Europäisches Patentamt
European Patent Office
Office européen des brevets

(11) **EP 1 451 614 B1**

(12) **EUROPÄISCHE PATENTSCHRIFT**

(45) Veröffentlichungstag und Bekanntmachung des Hinweises auf die Patenterteilung:
**27.02.2019  Patentblatt 2019/09**

(21) Anmeldenummer: **02781156.1**

(22) Anmeldetag: **08.11.2002**

(51) Int Cl.:
**G01S 7/497** *(2006.01)*    **G01V 8/12** *(2006.01)*

(86) Internationale Anmeldenummer:
**PCT/DE2002/004128**

(87) Internationale Veröffentlichungsnummer:
**WO 2003/054586 (03.07.2003 Gazette 2003/27)**

(54) **VERFAHREN ZUR STÖRLICHTKORREKTUR BEI EINER OPTISCHEN SENSORANORDNUNG**

STRAY LIGHT CORRECTION METHOD FOR AN OPTICAL SENSOR ARRAY

PROCEDE DE CORRECTION DE LUMIERE PARASITE DANS UN ENSEMBLE CAPTEUR OPTIQUE

(84) Benannte Vertragsstaaten:
**DE FR GB SE**

(30) Priorität: **06.12.2001  DE 10159932**

(43) Veröffentlichungstag der Anmeldung:
**01.09.2004  Patentblatt 2004/36**

(73) Patentinhaber: **Conti Temic Microelectronic GmbH**
**90411 Nürnberg (DE)**

(72) Erfinder: **BEUSCHEL, Michael**
**85092 Kösching (DE)**

(56) Entgegenhaltungen:
**WO-A-95/25322     DE-A- 3 530 011**
**DE-A- 10 011 598     US-A- 5 933 242**
**US-A- 6 157 024**

**Beschreibung**

Die Erfindung betrifft ein Verfahren zur Störlichtkorrektur bei einer optischen Sensoranordnung nach dem Oberbegriff des Patentanspruchs 1. Das erfindungsgemäße Verfahren eignet sich insbesondere als Auswerteverfahren für optische Precrash-Sensoren in Fahrzeugen, sogenannte CV-Sensoren (**c**losing **v**elocity, Annäherungsgeschwindigkeit).

Um die Sicherheit im Straßenverkehr zu verbessern, werden verstärkt optische Sensoranordnungen als Hinderniswarnsysteme in Fahrzeuge eingebaut, die zur Unterstützung des Insassenschutzsystems sowie des Fahrers vor allem die unmittelbare Umgebung vor dem sich bewegenden Fahrzeug erfassen und vor Gefahrenquellen wie beispielsweise stehenden oder sich bewegenden Hindernissen auf der Fahrbahn warnen.

Bei optischen Sensoranordnungen treten neben dem erwünschten Nutzsignal, das durch Lichtreflexion potentieller Kollisionsobjekte hervorgerufen wird, auch weitere Anteile auf, die das Nutzsignal überlagern und somit verfälschen können, beispielsweise Reflexionen innerhalb des SensorGehäuses, Reflexionen an der Windschutzscheibe infolge Brechungsgesetz, zusätzliche Reflexionen an der Windschutzscheibe infolge Verschmutzung oder Reflexionen an Karosserieteilen (z.B. Motorhaube).

Der Signalverlauf des Störlichtanteils ist zudem abhängig von weiteren Effekten, wie der Temperatur der beteiligten Bauteile (z.B. der Pulsform des Senders und Übertragungsverhalten des Empfängers).

Bisher bestehen folgende Ansätze zur Lösung des Problems:
Die Unterdrückung von Störlicht kann auf **optischer** Seite erfolgen, indem ein zusätzlicher optischer Sensor so angeordnet wird, dass er während der Objektmessung nur Störlicht aber kein Nutzsignal empfängt (Differenzsensor). Aus konstruktiven Gründen sowie aufgrund des erhöhten Hardware-Aufwands erscheint dieser Weg problematisch, da sich eine für alle Betriebsfälle geeigneter Anordnung praktisch nicht finden lässt.

Kann keine Vergleichsmessung erfolgen, besteht die Möglichkeit der negativen Einkopplung eines **elektrischen** Signals in den Empfänger. Dieser Weg ist ebenfalls aus aufgrund des erhöhten Hardware-Aufwands problematisch. Zudem muss ein für alle Betriebsfälle geeignetes Einkoppelverhalten bestimmt werden.

Zur Unterdrückung von Störlicht kann auch nach der Abtastung und Digitalisierung der Messwerte ein konstantes **Kennfeld** mit Korrekturwerten für jeden Abtastzeitpunkt eingesetzt werden. Diese Werte werden jeweils vom zugehörigen Abtastwert vor der weiteren Verarbeitung der Daten subtrahiert. Da die Wirkung des Störlichts u.a. von der temperaturabhängigen Pulsform des Senders abhängig ist, muss diese zusätzliche Abhängigkeit ebenfalls berücksichtigt und kalibriert werden. Effekte, wie die Verschmutzung der Windschutzscheibe sind nicht erfassbar und können mit diesem Ansatz nicht korrigiert werden.

Zur Unterdrückung von Störlicht durch sehr nahe Reflexionen kann auch eine **Verschiebung** des zeitlichen **Empfangsfensters** dienen (elektrische oder logische Verschiebung bzw. Ausblendung). Dies ist möglich, wenn die kleinste zu erfassende Objektentfernung größer als die auf Entfernung umgerechnete Pulsdauer ist. Beim betrachteten Anwendungsfall steht eine minimale Objektentfernung von ca. 2 m einer Pulslänge von ca. 5 m gegenüber. Damit käme es zu einer nicht akzeptablen Ausblendung relevanter Information.

Eine beispielsweise aus der deutschen Offenlegungsschrift DE 41 41 469 A1 bekannte Lösung des Problems besteht darin, bei jeder Messung mit Objekt eine entsprechende Vergleichsmessung ohne Objekt durchzuführen. Durch Differenzbildung beider Messungen kann dann der Störlichteinfluss weitgehend eliminiert werden.

Im Einzelnen wird vor und/oder nach Aussenden eines Lichtsignals ein eventuell vorhandenes Störsignal erfasst und die dadurch gewonnene Information zur Bestimmung des Störsignalverlaufs während der Lichtsignalaussendung herangezogen. Daraufhin wird das zuvor bestimmte Störsignal von dem empfangenen Gesamtlichtsignal subtrahiert, um auf diese Weise das gewünschte Nutzsignal zu erhalten.

Nachteilig hierbei ist zum einen, dass Referenzmessungen vor/nach Aussendung des Lichtsignals erforderlich sind, um daraus das Störsignal zu ermitteln. Diese Referenzmessungen verringern die Leistungsfähigkeit des Sensors. Zum anderen werden als Störsignale ausschließlich externe Einflüsse erfasst, wodurch nur diese korrigiert werden können. Optische Reflexionen von Signalanteilen des eigenen Senders, die einbaubedingt nicht weiter verringert werden können sowie elektrisches Übersprechen der Senderansteuerung auf den Empfänger werden daher nicht als Störsignale erkannt. Zudem wird das zeitliche Verhalten der Anteile des Gesamtlichtsignals nicht berücksichtigt, wodurch beispielsweise periodische und synchrone Signalanteile ebenfalls nicht als Störsignale erkannt werden.

Die US 6,157,024 A betrifft ein Überwachungssystem für Fensteröffnungen in Fahrzeugen. Vor jeder Aktivierung des Überwachungssystems erfolgt eine Initialisierung unter Benutzung einer speziellen Kalibrierungs-LED.

Die US 5,933,242 A betrifft ein Betriebsverfahren für einen optoelektronischen Sensor mit einem Lichtsender und einem zugehörigen Empfänger. Der Lichtsender sendet Lichtsignale in einen überwachten Bereich aus und der Empfänger empfängt reflektierte Anteile dieser Lichtsignale und liefert ein Signal, dessen Amplitude hinsichtlich der Präsenz eines Objekts im überwachten Bereich ausgewertet wird. Wenn die Amplitude einen Schwellwert über- oder unterschreitet wird ein Objekterkennungssignal ausgegeben. Um den Schwellwert korrekt zu setzen, wird vor der Inbetriebnahme des Sensors der Schwellwert automatisch abhängig von Amplitudenwerten gesetzt, die in einem vorgegebenen Messintervall im Rahmen eines Initialisierungsprozesses mit einem Objekt-freien überwachten Bereich auftreten.

Die DE 100 11 598 A1 offenbart eine optoelektronische Sensoranordnung sowie ein Verfahren zum Betreiben derselben. Dazu ist ein Empfänger mit einer Vielzahl von lichtempfindlichen Sensoren vorgesehen. Jeweils während eines Aktivierungsintervalls wird synchron mit dem Aussenden von Nutzlichtimpulsen für jeden Sensor die Lichtintensität des jeweils empfangenen reflektierten Nutzlichtimpulses erfasst. Zwischen zwei aufeinanderfolgenden Aktivierungsintervallen während eines Korrekturintervalls wird für jeden Sensor die Lichtintensität des empfangenen Hintergrundlichtes als Korrekturwert gespeichert. Dieser wird während des Aktivierungsintervalls von den erfassten Nutzlichtimpulsen subtrahiert und das verbleibende Signal einer Signalverarbeitung zugeführt.

Die DE 35 30 011 A beschreibt ein Verfahren zur Verbesserung der Genauigkeit von Messlichtschranken, bei dem für die Messung Lichtimpulse erzeugt werden. Anschließend werden die empfangenen Signale, die kurz vor und bei einem Sendelichtimpuls gespeichert werden, voneinander subtrahiert.

Aus der WO 95/25322 A ist eine Vorrichtung mit einem passivem Infrarotsensor zum Erfassen des Vorhandenseins eines Objekts bekannt. Der Infrarotsensor erzeugt dabei ein Signal als Reaktion auf ein wärmeabgebendes Objekt, das sich in seinem Sichtfeld bewegt. Durch einen Bandpassfilter werden nur Signale mit einer Frequenz innerhalb einer vorbestimmten Bandcharakteristik weitergeleitet, wobei das Vorhandensein eines Objekts durch die Detektion eines Signals in dem entsprechenden Band angezeigt wird.

Der Erfindung liegt die Aufgabe zugrunde, ein Verfahren zur Störlichtkorrektur nach dem Oberbegriff des Anspruchs 1 so zu gestalten, dass die Leistungsfähigkeit des Sensors merklich verbessert wird.

Gelöst wird diese Aufgabe durch ein Verfahren mit den im Anspruch 1 angegebenen Merkmalen.

Das Verfahren nach Anspruch 1 weist die Vorteile auf, dass keine Referenzmessungen benötigt werden und alle Messungen bei normalem Sendebetrieb stattfinden. Neben langsamen externen Störanteilen können auch solche berücksichtigt und korrigiert werden, die in ursächlichem Zusammenhang mit dem Lichtsender stehen, wie optische Reflexionen oder Übersprechen. Weiterhin werden periodische und synchrone Signalanteile als Störungen erkannt. Zudem wird eine Reduzierung der benötigten Hardware-Ressourcen und des Kalibrieraufwands in der Fertigung erzielt.

Um Nutzsignale sehr kleiner Amplitude auswerten zu können, werden vorhandene Störsignale durch unerwünschte optische Effekte, sogenanntes Störlicht, korrigiert. Dies erhöht die Empfindlichkeit des Sensors.

Der vorgeschlagene selbständig arbeitende und adaptive Algorithmus erspart eine Kalibrierung des Sensors während der Fertigung und passt sich ebenso automatisch umgebungsbedingten Drifteffekten an.

Vorteilhafte Ausgestaltungen des Verfahrens nach Anspruch 1 sind in den Unteransprüchen angegeben.

Die Erfindung wird nun anhand eines Ausführungsbeispiels unter Zuhilfenahme der Zeichnung erläutert.

Es zeigen

Fig. 1a:     ein Diagramm mit der zeitlichen Abfolge der Helligkeit von unkorrigierten Abtastwerten und Korrekturwerten aus einer fiktiven Vergleichsmessung,

Fig. 1b:     ein Diagramm mit der zeitlichen Abfolge der Helligkeit von korrigierten Abtastwerten nach Fig. 1a und

Fig. 2:     einen Ablaufplan mit dem erfindungsgemäßen Algorithmus zur Störlichtkorrektur.

Zur Lösung der eingangs geschilderten Schwierigkeiten erscheint der Ansatz einer Korrektur mittels Datenverarbeitung am flexibelsten und mit dem geringsten Hardwareaufwand zu realisieren. Die vorgeschlagene Lösung basiert auf dem Prinzip der Vergleichsmessung. Allerdings sind Vergleichsmessungen, wie eingangs gefordert, im Feld nicht praktikabel. Als Abhilfe wird für jeden Abtastwert ein adaptiver Korrekturwert vorgeschlagen, der sich an einer fiktiven Vergleichsmessung orientiert:

Da die für die beabsichtigte Anwendung vorgesehene Sensoranordnung für Geschwindigkeiten ungleich Null ausgelegt ist, tritt bei Objekten begrenzter Ausdehnung stets innerhalb bestimmter zeitlicher Abstände der Zustand ein, dass sich kein zu erkennendes Objekt im Blickfeld der Sensoranordnung innerhalb eines bestimmten Entfernungsfensters befindet. Dieser Zustand wird als Vergleichsmessung herangezogen.

Der hierzu vorgeschlagene Algorithmus erkennt solche Zustände und nutzt sie zur Kalibrierung der Korrekturwerte. Die Korrekturwerte werden anschließend von den zugehörigen Messwerten subtrahiert.

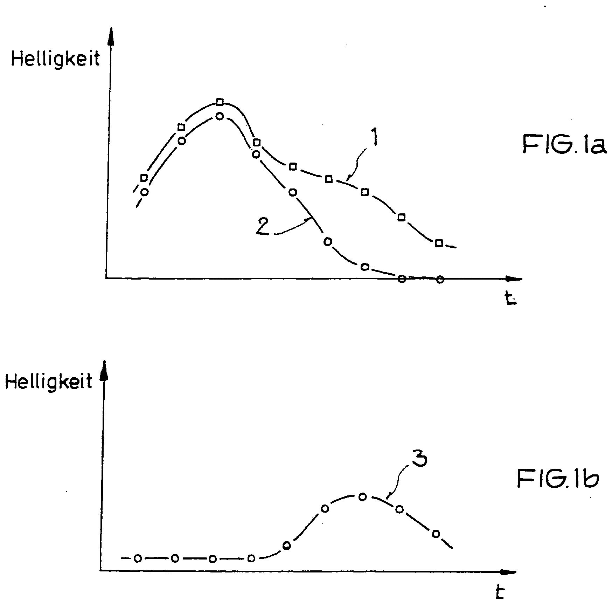

Die **Fig. 1a** zeigt ein Diagramm mit der zeitlichen Abfolge der Helligkeit von unkorrigierten Abtastwerten und Korrekturwerten aus einer fiktiven Vergleichsmessung. Eine erste Kurve **1** beinhaltet die unkorrigierten Messwerte, aus denen ein zu messendes Objekt nicht erkannt wird, da Maximum und Schwerpunkt des Signals durch die Störlichtanteile dominiert werden. Werden dagegen aus vorangegangenen Messungen Korrekturwerte bestimmt, die in einer Kurve **2** enthalten sind, können diese von den Messwerten subtrahiert werden. Das in einer Kurve **3** der **Fig. 1b** verbleibende Signal zeigt deutlich den Anteil des zu messenden Objekts.

Bei dem vorgeschlagenen Verfahren wird ausgenützt, dass sich die Störlichtquellen im Vergleich zum Nutzsignal sehr langsam ändern (z.B. infolge Temperaturdrift). Da sich alle Signalanteile positiv überlagern, kann somit das gemessene Signal nie unter die durch den Störlichtanteil bedingten Werte absinken.

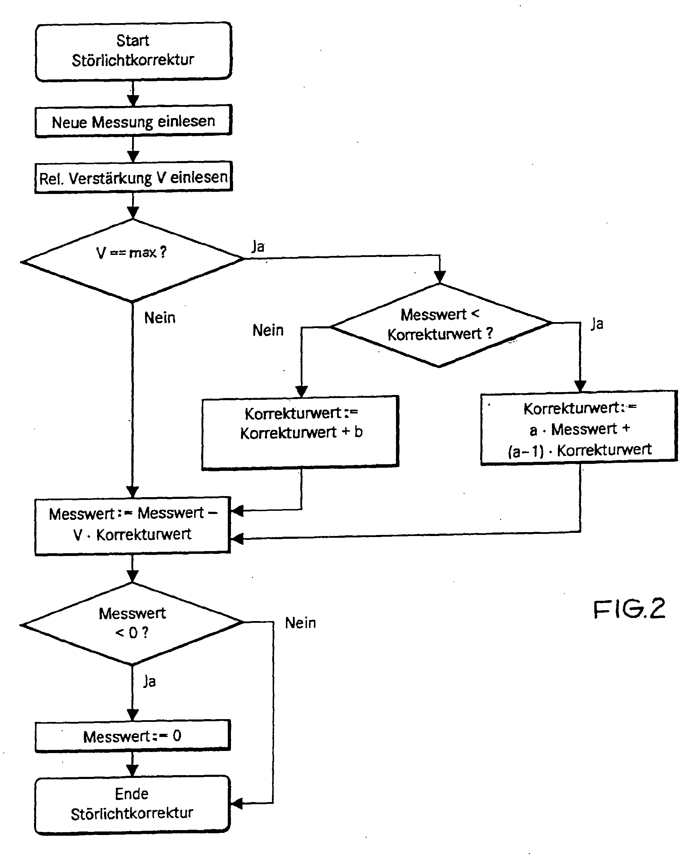

Aus **Fig. 2** ist ein Ablaufplan mit dem erfindungsgemäßen Algorithmus ersichtlich. Der Algorithmus verwendet für jeden Abtastwert ein Filter mit richtungsabhängigem Verhalten:

- Ist ein aktueller **Messwert kleiner als** ein gespeicherter **Korrekturwert** (oder gleich), wird der Korrekturwert sehr rasch verringert, jedoch nicht auf Werte unter den aktuellen Messwert. Dieser Fall tritt auf, wenn ein Objekt das Blickfeld der Sensoranordnung verlassen hat und somit die Bedingung für eine fiktive Vergleichsmessung vorliegen.

Die Verringerung des Korrekturwertes kann z.B. durch direktes Übernehmen des (kleineren) aktuellen Messwerts als neuen Korrekturwert erfolgen. Sollen rauschbedingte Minima unberücksichtigt bleiben, kann die Anpassung auch nach folgender Formel erfolgen ($a$ stellt einen Aktualisierungsgrad dar, $i$ ist der Index des Messwerts):

$$Korrekturwert_{neu}(i) = a \cdot Messwert(i) + (1-a) \cdot Korrekturwert_{alt}(i)$$

Diese Gleichung stellt eine gewichtete Summe aus dem alten Korrekturwert und dem neuen Messwert dar, wobei die Summe der Gewichtsfaktoren stets gleich eins ist. Für $a = 1$ wird der aktuelle Messwert direkt als neuer Korrekturwert übernommen. Die Adaption arbeitet damit im Wesentlichen als gleitendes Minimum der Messwerte eines Abtastvorgangs.

Für $0 < a < 1$ entspricht das Verhalten einem Tiefpass 1. Ordnung zur Filterung von Störungen, insbesondere von Ausreissern nach unten. Dadurch erfolgt zwar die Adaption in Richtung kleinerer Korrekturwerte langsamer als bei direkter Übernahme des Messwerts, dafür wird der Rauschpegel reduziert, wenn ggf. nach der Korrektur auftretende negative Abtastwerte auf Null gesetzt werden.

- Ist der aktuelle **Messwert größer als** der gespeicherte **Korrekturwert,** wird der Korrekturwert langsam vergrößert, jedoch nicht auf Werte oberhalb des aktuellen Messwerts. Dieser Fall deckt langsame Veränderungen des Störlichtverhaltens (z.B. durch Drifteffekte) ab, sofern sie zu einer Vergrößerung des Störlichtanteils bei bestimmten Messwerten führen (eine Verringerung des Störlichtanteils wird durch die im vorangehenden Abschnitt genannte Adaption abgedeckt).

Der Fall, dass Messwerte größer sind als die Korrekturwerte tritt *auch* auf, während sich ein Objekt im Blickfeld des Sensors befindet. Die Erhöhung der Korrekturwerte muss dabei so langsam sein, dass die Messung des Objekts nicht beeinträchtigt wird. Dies wird z.B. dadurch erreicht, dass der Korrekturwert bei jedem Auftreten dieses Falls um einen Wert $b > 0$ inkrementiert wird. Der Inkrementierwert $b$ wird während des Betriebs nicht verändert und vorteilhaft als Parameter implementiert und in einem Speicher (EEPROM) abgelegt.

Alternativ kann stets eines der beiden Verfahren zur Vergrößerung bzw. Verringerung der Korrekturwerte eingesetzt werden, mit unterschiedlichen Anpassungsgeschwindigkeiten nach oben bzw. unten. Dabei werden vorteilhaft richtungsabhängige Werte a bzw. b gewählt, so dass die Anpassung zu kleineren Korrekturwerten schneller erfolgt als zu großen.

Eine vorteilhafte Ausgestaltung liegt darin, dass die Änderung der Korrekturwerte in wenigstens eine Richtung nur bei Erfüllung einer Bedingung erfolgt. Es ist zudem von Vorteil, dass beim Vorhandensein eines Objekts ein korreliertes Signal erzeugt wird. Die Bedingung zur Änderung der Korrekturwerte ist beispielsweise dann erfüllt, wenn das korrelierte Signal einen Schwellwert über- oder unterschreitet. Es ist weiterhin von Vorteil, eine Signalamplitude als Funktion der Abtastwerte zu bestimmen und die Signalamplitude als Maximum der Abtastwerte zu definieren. Dadurch ist es möglich, das korrelierte Signal durch die Signalamplitude darzustellen.

Bei der Implementierung muss zusätzlich ein vorhandener Skalierungsfaktor $V$ für das gesendete und empfangene Signal berücksichtigt werden. Die fiktive Vergleichsmessung wird dadurch skaliert. Der Skalierungsfaktor $V$ wird vorteilhaft durch eine Regelung bestimmt und sei bei fehlendem Objekt im Blickfeld der Sensoranordnung maximal. Bei einem kleineren Skalierungsfaktor muss vom Vorhandensein eines Objekts im Blickfeld der Sensoranordnung ausgegangen werden. Der Skalierungsfaktor $V$ kann auch vorteilhaft durch das korrelierte Signal dargestellt sein.

Die Berücksichtigung des Skalierungsfaktors $V$ bei der Ermittlung eines neuen adaptiven Korrekturwerts kann auf folgende Weise erfolgen:

- Die Adaption der Störlichtkorrektur, d.h. die Ermittlung eines neuen adaptiven Korrekturwerts, wird **nur bei maximalem Skalierungsfaktor $V$** aktiviert, wenn also kein Objekt im Blickfeld der Sensoranordnung zu erkennen ist. Dies eignet sich, wenn eine feste Obergrenze der Korrekturwerte im zulässigen Betrieb nicht überschritten wird und die Korrekturwerte nicht für weitere laufende Berechnungen verwendet werden.

Die Anwendung der Störlichtkorrektur (jedoch ohne Adaption) kann in diesem Fall entweder auch auf den Betrieb mit maximalem Skalierungsfaktor beschränkt oder alternativ mit den mit *V* skalierten Korrekturwerten für kleinere Skalierungsfaktoren fortgesetzt werden.

- Die Adaption und Anwendung der Störlichtkorrektur wird für einen festgelegten **Bereich des Skalierungsfaktors V** aktiviert (dies schließt auch eine Aktivierung im gesamten Skalierungsbereich ein). Für den Vergleich mit den aktuellen Messwerten müssen in diesem Fall die gespeicherten Korrekturwerte jeweils mit dem Skalierungsfaktor V multipliziert werden.

Ein vorhandener verstärkungsunabhängiger Offset des Signals muss in beiden Fällen berücksichtigt werden.

Die Fig. 2 zeigt das Ablaufdiagramm für einen Abtastwert und für den oben beschriebenen Fall ohne Zähler und Adaption nur bei maximaler Verstärkung. Der Ablauf muss dabei für alle Abtastwerte wiederholt werden.

Die vorgeschlagene adaptive Störlichtkorrektur eignet sich aufgrund der dynamischen Anpassung der Korrektur nicht für stationäre Messungen (wofür die verwendete Sensoranordnung auch nicht vorgesehen ist). Die Anpassung in positive Richtung muss jeweils so ausgelegt sein, dass die Erkennung des schwächsten Nutzsignals innerhalb der maximalen Messzeit

$$t_{\max} = \frac{Erfassungsbereich_{\max}}{Objektgeschwindigkeit_{\min}}$$

nicht nennenswert beeinträchtigt wird, d.h. die gesamte Adaption in positive Richtung während der maximalen Messzeit $t_{\max}$ muss deutlich kleiner sein als die Amplitude des Nutzsignals.

Das erfindungsgemäße Korrekturverfahren ist auch in der Lage, andere quasi-stationäre Effekte zu kompensieren, wie z.B.

- Elektrisches Übersprechen, sofern dieses synchron mit dem Zeitfenster der Messung ist (bei Takt- und Triggersignalen vielfach der Fall),

- Asymmetrie der Digitalisierung bei Verwendung mehrerer zeitlich versetzt arbeitender AD-Umsetzer,

- Offset der gesamten Messung (nur innerhalb einer Verstärkerstufe) und

- langsame Verschmutzung des Sichtbereichs (z.B. der Windschutzscheibe).

Zusätzlich lassen sich die gespeicherten Korrekturwerte unter bestimmten Voraussetzungen zur Diagnose des Sensors und zum Abgleich der Entfernungsberechnung nutzen, da sie stets den aktuellen Zustand von Sensor und Sensorumgebung wiederspiegeln.

## Patentansprüche

1. Verfahren zur Störlichtkorrektur bei einer optischen Sensoranordnung zur Erfassung der unmittelbaren Umgebung vor einem sich bewegenden Fahrzeug, die aus einem Lichtsender und einem zugehörigen Empfänger besteht, wobei mittels des Lichtsenders in periodischen Zeitabständen in das Blickfeld der Sensoranordnung zur Feststellung von Objekten Lichtsignale gesendet werden und auf den Empfänger auftreffende reflektierte Anteile der Lichtsignale auf das Vorhandensein von Objekten hinweisen, **dadurch gekennzeichnet, dass** aus den auf den Empfänger auftreffenden reflektierten Anteile der Lichtsignale ein Abtastwert generiert und in einem Zustand, bei dem sich kein zu erkennendes Objekt im Blickfeld der Sensoranordnung innerhalb eines bestimmten Entfernungsfensters befindet, ein Korrekturwert für den Abtastwert ermittelt wird, der Korrekturwert gespeichert wird und für einen Messwert einer nachfolgenden Messung der Korrekturwert verringert wird, wenn der aktuelle Messwert kleiner als der gespeicherte Korrekturwert ist.

2. Verfahren nach Anspruch 1, **dadurch gekennzeichnet, dass** die gespeicherten Korrekturwerte von den Abtastwerten subtrahiert werden.

3. Verfahren nach einem der Ansprüche 1 oder 2, **dadurch gekennzeichnet, dass** für einen Messwert einer nachfolgenden Messung der Korrekturwert vergrößert wird, wenn der aktuelle Messwert größer als der gespeicherte Korrekturwert ist.

**4.** Verfahren nach Anspruch 1 oder 3, **dadurch gekennzeichnet, dass** die Änderung des Korrekturwerts in wenigstens eine Richtung durch Addition bzw. Subtraktion eines Wertes (b) erfolgt.

**5.** Verfahren nach Anspruch 4, **dadurch gekennzeichnet, dass** der zu addierende bzw. zu subtrahierende Wert (b) größer Null ist.

**6.** Verfahren nach Anspruch 1 oder 3, **dadurch gekennzeichnet, dass** die Änderung des Korrekturwerts in wenigstens eine Richtung durch die Gleichung:

$$Korrekturwert_{neu}(i) = a \cdot Messwert(i) + (1-a) \cdot Korrekturwert_{alt}(i)$$

mit einem Aktualisierungsgrad (a) erfolgt.

**7.** Verfahren nach einem der Ansprüche 3 bis 6, **dadurch gekennzeichnet, dass** die Änderung der Korrekturwerte zu kleineren und größeren Werten mit einem der beiden Verfahren zur Vergrößerung bzw. Verringerung der Korrekturwerte erfolgt.

**8.** Verfahren nach einem der Ansprüche 3 bis 7, **dadurch gekennzeichnet, dass** die Änderung der Korrekturwerte zu kleineren Werten schneller erfolgt als zu größeren Werten.

**9.** Verfahren nach einem der Ansprüche 1, 3 bis 8, **dadurch gekennzeichnet, dass** die Änderung der Korrekturwerte in wenigstens eine Richtung nur dann erfolgt, wenn eine zugehörige Bedingung erfüllt ist.

**10.** Verfahren nach einem der Ansprüche 1 bis 9, **dadurch gekennzeichnet, dass** ein Skalierungsfaktor (*V*) für das gesendete oder empfangene Signal bei der Berechnung berücksichtigt wird.

**11.** Verfahren nach Anspruch 10, **dadurch gekennzeichnet, dass** der Skalierungsfaktor (*V*) durch eine Regelung bestimmt wird.

**12.** Verfahren nach einem der Ansprüche 1 bis 11, **dadurch gekennzeichnet, dass** beim Vorhandensein eines Objekts ein korreliertes Signal erzeugt wird.

**13.** Verfahren nach einem der Ansprüche 1 bis 12, **dadurch gekennzeichnet, dass** eine Signalamplitude als Funktion der Abtastwerte bestimmt wird.

**14.** Verfahren nach Anspruch 13, **dadurch gekennzeichnet, dass** die Signalamplitude als Maximum der Abtastwerte definiert wird.

**15.** Verfahren nach Anspruch 12 und Anspruch 13 oder 14, **dadurch gekennzeichnet, dass** das korrelierte Signal durch die Signalamplitude dargestellt wird.

**16.** Verfahren nach Anspruch 9 und Anspruch 12 oder 15, **dadurch gekennzeichnet, dass** die Bedingung erfüllt ist, wenn das korrelierte Signal einen Schwellwert über- oder unterschreitet.

**17.** Verfahren nach Anspruch 10 oder 11 und Anspruch 12 bis 16, **dadurch gekennzeichnet, dass** das korrelierte Signal den Skalierungsfaktor (*V*) für das gesendete oder gemessene Signal darstellt

**Claims**

**1.** A stray light correction method in an optical sensor arrangement for capturing the immediate surroundings in front of a moving vehicle, which consists of a light emitter and an associated receiver, whereby light signals are emitted by means of the light emitter in periodic time intervals into the field of view of the sensor arrangement for the detection of objects, and reflected components of the light signals incident on the receiver indicate the presence of objects, **characterised in that** a sampled value is generated from the reflected components of the light signals incident on the receiver, and a correction value for the sampled value is determined in a state in which no object to be recognized is present within a particular distance window in the field of view of the sensor arrangement, the correction value is stored and, for a measured value of a subsequent measurement, the correction value is reduced if the current measured value is less than the stored correction value.

**2.** The method according to Claim 1, **characterised in that** the stored correction values are subtracted from the sampled values.

**3.** The method according to any one of Claims 1 or 2, **characterised in that**, for a measured value of a subsequent measurement, the correction value is increased if the current measured value is greater than the stored correction value.

**4.** The method according to Claim 1 or 3, **characterised in that** the change of the correction value in at least one direction takes place by addition or respectively subtraction of a value (b).

**5.** The method according to Claim 4, **characterised in that** the value (b) to be added or to be subtracted is greater than zero.

**6.** The method according to Claim 1 or 3, **characterised in that** the change of the correction value in at least one direction takes place according to the equation:

$$correction\ value_{new}(i)=a \cdot measured\ value\ (i)+(1-a) \cdot correction\ value_{old}\ (i)$$

with an updating degree (a).

**7.** The method according to any one of Claims 3 to 6, **characterised in that** the change of the correction values to smaller and larger values takes place with one of the two methods for increasing or respectively reducing the correction values.

**8.** The method according to any one of Claims 3 to 7, **characterised in that** the change of the correction values to smaller values takes place more quickly than to larger values.

**9.** The method according to any one of Claims 1, 3 to 8, **characterised in that** the change of the correction values in at least one direction only takes place if an associated condition is fulfilled.

**10.** The method according to any one of Claims 1 to 9, **characterised in that** a scaling factor (*V*) for the emitted or received signal is taken into consideration in the calculation.

**11.** The method according to Claim 10, **characterised in that** the scaling factor (*V*) is determined through a closed-loop control.

**12.** The method according to any one of Claims 1 to 11, **characterised in that** a correlated signal is produced in the presence of an object.

**13.** The method according to any one of Claims 1 to 12, **characterised in that** a signal amplitude is determined as a function of the sampled values.

**14.** The method according to Claim 13, **characterised in that** the signal amplitude is defined as the maximum of the sampled values.

**15.** The method according to Claim 12 and Claim 13 or 14, **characterised in that** the correlated signal is represented by the signal amplitude.

**16.** The method according to Claim 9 and Claim 12 or 15, **characterised in that** the condition is fulfilled if the correlated signal exceeds or falls below a threshold value.

**17.** The method according to Claim 10 or 11 and Claims 12 to 16, **characterised in that** the correlated signal represents the scaling factor (*V*) for the emitted or measured signal.

**Revendications**

**1.** Procédé de correction de lumière parasite dans un ensemble capteur optique pour la détection de l'environnement direct devant un véhicule se déplaçant, lequel ensemble se compose d'un émetteur de lumière et d'un récepteur associé, des signaux lumineux étant envoyés dans le champ de vision de l'ensemble capteur au moyen de l'émetteur de lumière à intervalles temporels périodiques, pour la détection d'objets, et des composantes des signaux lumineux réfléchies atteignant l'émetteur indiquant la présence d'objets,
**caractérisé en ce qu'**un échantillon est généré à partir des composantes des signaux lumineux réfléchies atteignant l'émetteur et, dans un état dans lequel aucun objet devant être détecté se trouve dans le champ de vision de l'ensemble capteur dans une fenêtre de distance spécifique, une valeur de correction est déterminée pour l'échantillon, la valeur de correction est enregistrée et la valeur de correction est diminuée pour une valeur de mesure d'une mesure subséquente lorsque la valeur de mesure actuelle est inférieure à la valeur de correction enregistrée.

**2.** Procédé selon la revendication 1, **caractérisé en ce que** les valeurs de correction enregistrées sont soustraites des échantillons.

**3.** Procédé selon l'une des revendications 1 ou 2, **caractérisé en ce que** la valeur de correction est augmentée pour une valeur de mesure d'une mesure subséquente lorsque la valeur de mesure actuelle est supérieure à la valeur de correction enregistrée.

**4.** Procédé selon la revendication 1 ou 3, **caractérisé en ce que** la modification de la valeur de correction est effectuée dans au moins une direction par addition ou soustraction d'une valeur (b).

**5.** Procédé selon la revendication 4, **caractérisé en ce que** la valeur (b) devant être ajoutée ou devant être soustraite est supérieure à zéro.

**6.** Procédé selon la revendication 1 ou 3, **caractérisé en ce que** la modification de la valeur de correction est effectuée dans au moins une direction à l'aide de l'équation

$$valeur\ de\ correction\ _{nouvelle}\ (i) = valeur\ de\ mesure\ (i) + (1-a)\ valeur\ de\ correction\ _{ancienne}(i)$$

avec un degré d'actualisation (a).

**7.** Procédé selon l'une des revendications 3 à 6, **caractérisé en ce que** la modification des valeurs de correction en valeurs inférieures ou supérieures est effectuée avec un des deux procédés pour l'augmentation ou la diminution des valeurs de correction.

**8.** Procédé selon l'une des revendications 3 à 7, **caractérisé en ce que** la modification des valeurs de correction en valeurs inférieures est effectuée plus rapidement que la modification en valeurs supérieures.

**9.** Procédé selon l'une des revendications 1, 3 à 8, **caractérisé en ce que** la modification des valeurs de correction est effectuée dans au moins une direction uniquement lorsqu'une condition correspondante est remplie.

**10.** Procédé selon l'une des revendications 1 à 9, **caractérisé en ce qu'**un facteur d'échelle (*V*) est pris en compte lors du calcul pour le signal envoyé ou reçu.

**11.** Procédé selon la revendication 10, **caractérisé en ce que** le facteur d'échelle (*V*) est déterminé par une régulation.

**12.** Procédé selon l'une des revendications 1 à 11, **caractérisé en ce qu'**un signal corrélé est généré en cas de présence d'un objet.

**13.** Procédé selon l'une des revendications 1 à 12, **caractérisé en ce qu'**une amplitude de signal est déterminée comme fonction des échantillons.

**14.** Procédé selon la revendication 13, **caractérisé en ce que** l'amplitude de signal est définie comme maximum des échantillons.

**15.** Procédé selon la revendication 12 ou la revendication 13 ou 14, **caractérisé en ce que** le signal corrélé est représenté par l'amplitude de signal.

**16.** Procédé selon la revendication 9 ou la revendication 12 ou 15, **caractérisé en ce que** la condition est remplie lorsque signal corrélé dépasse positivement ou négativement une valeur seuil.

**17.** Procédé selon la revendication 10 ou 11 et la revendication 12 à 16, **caractérisé en ce que** le signal corrélé représente le facteur d'échelle ($V$) pour le signal envoyé ou mesuré.

FIG.1a

FIG.1b

```
        ┌─────────────────────┐
        │       Start         │
        │  Störlichtkorrektur │
        └──────────┬──────────┘
                   │
        ┌──────────▼──────────┐
        │ Neue Messung einlesen│
        └──────────┬──────────┘
                   │
        ┌──────────▼──────────┐
        │Rel. Verstärkung V einlesen│
        └──────────┬──────────┘
                   │
              ╱────▼────╲              Ja
            ╱  V == max ? ╲───────────────────┐
            ╲             ╱                    │
              ╲─────┬───╱                      ▼
                    │ Nein            ╱──────────────╲  Ja
                    │          Nein  ╱  Messwert <    ╲────┐
                    │        ┌──────╱  Korrekturwert ? ╲   │
                    │        │       ╲                ╱    │
                    │        │         ╲────────────╱      │
                    │        ▼                             ▼
                    │  ┌──────────────┐          ┌──────────────────┐
                    │  │Korrekturwert:=│          │ Korrekturwert:=  │
                    │  │Korrekturwert+b│          │  a · Messwert +  │
                    │  └──────┬───────┘          │(a-1)·Korrekturwert│
                    │         │                  └────────┬─────────┘
        ┌───────────▼─────────▼──┐                        │
        │ Messwert:= Messwert −  │◄───────────────────────┘
        │    V · Korrekturwert   │
        └───────────┬────────────┘
                    │
              ╱─────▼─────╲          Nein
            ╱   Messwert    ╲──────────────┐
            ╲    < 0 ?      ╱               │
              ╲─────┬─────╱                 │
                    │ Ja                    │
        ┌───────────▼────────────┐          │
        │    Messwert:= 0        │          │
        └───────────┬────────────┘          │
                    │                        │
        ┌───────────▼────────────┐          │
        │        Ende           │◄──────────┘
        │  Störlichtkorrektur   │
        └────────────────────────┘
```

FIG.2

11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4141469 A1
- US 6157024 A
- US 5933242 A
- DE 10011598 A1
- DE 3530011 A
- WO 9525322 A